# EUROPÄISCHE PATENTSCHRIFT

(11) **EP 2 028 164 B1**
(45) Veröffentlichungstag und Bekanntmachung des Hinweises auf die Patenterteilung: **09.03.2011**
(21) Anmeldenummer: 08104604.7
(22) Anmeldetag: 02.07.2008
(51) Int. Cl.: C03B 33/033, C03B 33/09, G02F 1/133

(54) **Verfahren und Vorrichtung zum Trennen einer Planplatte aus sprödbrüchigem Material in mehrere Einzelplatten mittels Laser**
Method and device for separating a plan plate made of brittle material into several individual plates with a laser
Procédé et dispositif destinés à la séparation d'une plaque plane d'un matériau fragile dans plusieurs plaques uniques par laser

(30) Priorität: 12.07.2007 DE 102007033242
(43) Veröffentlichungstag der Anmeldung: 25.02.2009
(73) Patentinhaber: JENOPTIK Automatisierungstechnik GmbH, 07745 Jena (DE)
(72) Erfinder: Zühlke, Hans-Ulrich, 07743, Jena (DE); Mende, Patrick, 07546, Gera (DE); Eberhardt, Gabriele, 07749, Jena (DE)
(74) Vertreter: Schaller, Renate

(56) Entgegenhaltungen:
- JP-A- 10 268 275

## Beschreibung

Die Erfindung betrifft ein Verfahren, mit dem durch das Einbringen von thermisch induzierten Spannungen mittels Laser eine Planplatte aus einem sprödbrüchigem Material wie Glas, Keramik oder einkristalline Materialien wie Silizium, Saphir oder GaliumArsenid, in mehrere Einzelplatten aufgetrennt wird sowie eine hierzu geeignete Vorrichtung. Ein gattungsgemäßes Verfahren und eine gattungsgemäße Vorrichtung sind aus der Patentschriften DE 100 41 519 C1und JP 102 68 275 bekannt.

Es ist bekannt, dass man durch das Einbringen von thermisch induzierten Spannungen mittels Laser spröde Materialien trennen kann. Dazu wird entlang der gewünschten Trennlinie (Bearbeitungslinie) zur Erzeugung von Druckspannungen eine Laserstrahlung auf die Materialoberfläche gerichtet und anschließend die erwärmte Zone mit einem Kühlmittelstrahl beaufschlagt, wodurch Zugspannungen erzeugt werden.
Liegt die entstehende Spannungsdifferenz oberhalb der Bruchspannung des Materials und befindet sich ein Defekt in der Bearbeitungslinie, so wird ein Reißen des Materials von dem Defekt ausgehend initiiert.
Sollte ein solcher Defekt nicht aufgrund vorhandener Mikrorisse, z. B. von einer mechanischen Schnittkante ausgehend vorhanden sein, muss gezielt ein Initialdefekt erzeugt werden z. B. durch ein Diamantschneidrädchen oder einem gut fokussierbaren Laser hoher Energiedichte. Für Letzteres kann der Bearbeitungslaser oder auch ein zweiter Laser verwendet werden.
Je nach der inneren Struktur des Materials kann entweder ein gezielter Tiefenriss oder ein das Material vollständig durchdringender Trennriss erreicht werden.

Um z. B. bei der Herstellung von Displayscheiben für Mobiltelefone und dergleichen oder bei der Herstellung von Chips eine Planplatte in eine Vielzahl von gleichen rechteckförmigen Einzelplatten aufzutrennen, wird die Planplatte zunächst entlang mehrerer parallel zueinander verlaufender erster Bearbeitungslinien und danach um einen Schnittwinkel von 90° versetzt, entlang mehrerer parallel verlaufender zweiter Schneidlinien getrennt. Dadurch entstehen, vorgegeben durch die Kreuzungspunkte der sich unter einem Winkel von 90° scheidenden Bearbeitungslinien, rechteckförmige Einzelplatten, deren Seitenlängen durch die Abstände der Bearbeitungslinien bestimmt sind.
Das Verfahren ist nicht beschränkt auf die Auftrennung in rechteckförmige Einzelplatten, sondern auf das Auftrennen in einem Gittermuster, von denen die Rechteckform eine sinnvolle Form für die o.g. Anwendungen darstellt.

In der Patentschrift DE 100 41 519 C1 wird als Problem für ein derartiges Verfahren die Schwierigkeit des Erzeugens der Initialdefekte an den Kreuzungspunkten erkannt.
Danach sei das Auftrennen einer Planplatte beginnend von einer Planplattenkante entlang einer ersten Bearbeitungsrichtung in eine Vielzahl von Streifenplatten unproblematisch, da ein Schneidrädchen zum Setzen des pro Trennlinie notwendigen Initialdefektes maßgenau an der Planplattenkante angesetzt werden kann.
Hingegen müsse beim Setzen der Initialdefekte an den entstandenen Streifenplattenkanten, genauer an den Kreuzungspunkten, zum Auftrennen der aneinanderliegenden Streifenplatten in Einzelplatten das Schneidrädchen von oben aufgesetzt werden. Dies würde verfahrensbedingt zu einer Beschädigung der zusammenlaufenden Ecken der Einzelplatten führen.

In der Patentschrift DE 100 41 519 C1 wird nun vorgeschlagen, die aus einer Flachglasplatte geschnittenen Streifenplatten um einen vorgegebenen Abstand auseinander zu bewegen, bevor diese in Einzelplatten getrennt werden. Dadurch kann das Schneidrädchen auch an die Streifenplattenkanten maßgenau angesetzt werden.
Zu diesem Zweck wird die Flachglasplatte auf einen Schneidtisch aufgelegt, der aus mehreren auseinander fahrbaren Plattensegmenten besteht. Vorzugsweise ist dem Schneidtisch ein Vakuumsystem zum Aufspannen der Flachglasplatte und der zerschnittenen Teile zugeordnet. Besondere Vorteile werden versprochen, wenn jedem Tischsegment ein getrennt ansteuerbares Vakuumfeld zugeordnet ist. Dadurch könnten die zugeschnittenen Streifenplatten getrennt fixiert und gelöst werden, so dass ein negativer Einfluss des durch das Vakuum eventuell verspannten Glases auf den nachfolgenden Laserschnitt vermieden werden würde.
Neben den hohen mechanischen Aufwendungen, verbunden mit einem Schneidtisch der hier beschriebenen Art, hat eine Vorrichtung mit einem solchen Schneidtisch den entscheidenden Nachteil, dass die Streifenplattenbreite nicht frei wählbar ist, sondern durch die Breite der einzelnen Tischsegmente vorgegeben wird. So kann die Streifenplattenbreite nur gleich der Breite eines Tischsegmentes oder dem Vielfachen der Breite eines Tischsegments gewählt werden.
Sie ist auch auf Mindestdicken für die Flachglasplatte beschränkt, wie sie üblicherweise direkt auf den Schneidtisch aufgelegt werden.

Planplatten im Dickenbereich von 100 - 300 µm, wie sie z. B. aus Silizium oder GaliumArsenid als dünne Wafer hergestellt werden, werden üblicherweise nur auf Stretchfolien aufgeklebt. Nach fertiger Bearbeitung und Vereinzelung der Chips wird die Stretchfolie gedehnt, um zum einen eine mechanische Beschädigung der Chipkanten während des Transportes zu vermeiden und zum anderen die Chips einzeln von der Folie lösen zu können, ohne dass sie dabei in Kontakt mit benachbarten Chips kommen.

Das Vereinzeln der Chips erfolgt nach derzeitiger Praxis überwiegend durch mechanisches Sägen. In der Patentanmeldung DE 10 2005 012 144 A1 wird eine Vorrichtung beschrieben, mit der in einem auf einer Folie gehaltenen Wafer gitterförmig angeordnete Trennlinien durch Materialabtrag mittels Laser eingebracht werden. Ein Materialabtrag verbirgt jedoch immer die Gefahr der Verunreinigung der Waferoberfläche.

Durch die Anmelderin selbst wurden Versuche durchgeführt, einen auf einer Folie gehaltenen Wafer durch thermisches Induzieren von Spannungen mittels Laser gitterförmig aufzutrennen, wie es einleitend bereits kurz beschrieben wurde.
Dabei haben sich Qualitätsmängel an den Kreuzungspunkten zwischen den Bearbeitungslinien in der ersten Bearbeitungsrichtung und den Bearbeitungslinien in der zweiten Bearbeitungsrichtung gezeigt. Diese sind jedoch nicht darauf zurückzuführen, dass das Werkzeug, z. B. ein Laser bzw. ein Diamantschneidrädchen, von oben auf die Planplattenoberfläche im Kreuzungspunkt einwirkte, wie im Stand der Technik in der Patentschrift DE 100 41 519 C1 beschrieben, sondern durch die gegenseitige Beeinflussung der entstehenden Spannungen in den benachbarten Streifenplatten.
Der dem erzeugten Kühlmittelfleck voraneilende Wärmefleck bewirkt beim Übergang in den nachfolgenden Streifenplatten eine Materialausdehnung, wodurch dieser gegen die vorherigen Streifenplatten drückt und die Trennlinie am Streifenplattenende von ihrer vorgesehenen Trennrichtung abgelenkt wird. Bei einem vorgegebenen Kreuzungspunkt von zwei um 90° versetzten Trennlinien entsteht entsprechend kein sauberer rechter Winkel an den Ecken der Einzelplatten. Aus der JP 10-268275 A ist ein Verfahren zum Schneiden von Glassubstraten und eine dazu geeignete Vorrichtung bekannt. Das zu schneidende Glassubstrat wird auf einer Aufnahme fixiert, indem es über einen porösen dehnbaren Körper angesaugt wird.
Durch das Dehnen des Körpers werden die Schneideigenschaften verbessert, indem während des Schneidens Zugspannungen auf der Oberfläche des Glassubstrates generiert werden.
Das Verfahren dient nicht dem räumlichen Trennen geschnittener Substratteile.

Der Erfindung liegt die Aufgabe zugrunde, auf der Basis des Induzierens von thermischen Spannungen mittels Laser ein Verfahren zu finden, das geeignet ist, Planplatten aus sprödbrüchigem Material mit einer Materialdicke von kleiner 1 mm, insbesondere solche mit einer Materialdicke von 100 - 300 µm in Einzelplatten aufzuteilen. Das Verfahren soll auch anwendbar sein zum Auftrennen eines auf einer Folie gehaltenen Wafers in eine Vielzahl von Chips.

Des Weiteren liegt der Erfindung die Aufgabe zugrunde, eine Vorrichtung zu schaffen, mit der ein erfindungsgemäßes Verfahren ausführbar ist und die darüber hinaus das Auftrennen in rechteckförmige Chips frei wählbarer Abmessungen erlaubt.

Diese Aufgabe wird für ein Verfahren mit den Merkmalen des Anspruches 1 und für eine Vorrichtung mit den Merkmalen des Anspruches 3 gelöst.
Vorteilhafte Weiterbildungen sind in den Unteransprüchen beschrieben.

Anhand der Zeichnung werden die Vorrichtung und das Verfahren im Folgenden beispielhaft näher erläutert.

Es zeigen:
- Fig. 1a: eine Prinzipskizze einer Vorrichtung
- Fig. 2a: einen Ausschnitt aus Fig.1 zu einem Zeitpunkt t₁
- Fig. 2b: einen Ausschnitt aus Fig.1 zu einem Zeitpunkt t₂
- Fig. 3: eine Draufsicht auf einen Spanntisch mit aufgelegter Planplatte auf gerahmter Stretchfolie zu einem Zeitpunkt t₀
- Fig. 4a: einen Ausschnitt aus einer Draufsicht auf die Planplatte zum Zeitpunkt t₁
- Fig. 4b: einen Ausschnitt aus einer Draufsicht auf die Planplatte zum Zeitpunkt t₂
- Fig. 4c: einen Ausschnitt aus einer Draufsicht auf die Planplatte zu einem Zeitpunkt t₃

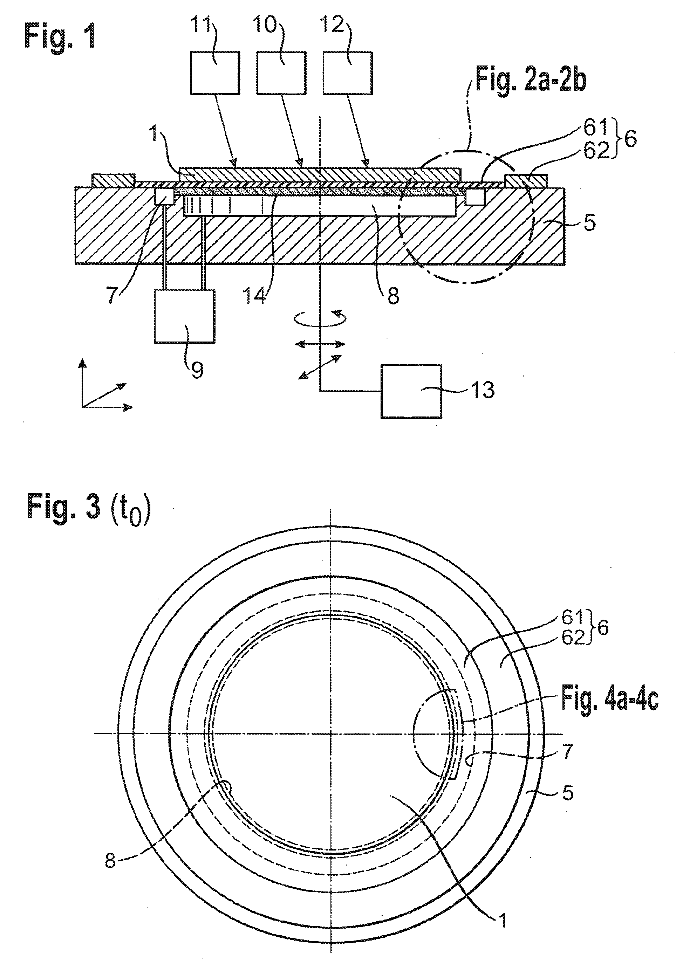

Die in Fig. 1 und Fig. 3 dargestellte vorteilhafte Ausführungsform einer Vorrichtung umfasst im Wesentlichen einen Spanntisch 5, auf dem das Werkstück, nämlich eine gerahmte Stretchfolie 6 mit einer darauf haftenden Planplatte 1 gehalten wird, sowie Werkzeuge, nämlich eine Einrichtung 12 zum Erzeugen von Initialdefekten, eine Einrichtung 10 zum Beaufschlagen einer Laserstrahlung, eine Einrichtung 11 zum Beaufschlagen einer Kühlmittelstrahlung sowie Mittel 13 zum relativen Bewegen der als Werkzeuge wirkenden Einrichtungen 10, 11, 12 zu der das Werkstück darstellenden Planplatte 1.
Zwingend muss als Relativbewegung wenigstens eine lineare Bewegung in eine Richtung und eine Drehbewegung um eine dazu senkrechte Achse oder eine Linearbewegung in zwei Richtungen innerhalb einer Ebene, einen Bearbeitungswinkel einschließend, möglich sein.

Gleich der aus der Patentschrift DE 100 41 519 C1 bekannten Vorrichtung wird die Planplatte 1 durch ein ansteuerbares Vakuumfeld auf dem Spanntisch 5 gehalten.

Gebildet wird ein solches Vakuumfeld durch eine Vakuumkammer 8, die in der Auflageebene des Spanntisches 5 durch eine poröse Einlage 14 verschlossen und mit einer Vakuumpumpe 9 verbunden ist. Die aufliegende gerahmte Stretchfolie 6 und damit die daran haftende Planplatte 1 werden an die poröse Einlage 14 anliegend angesaugt und somit kraftschlüssig gehalten.

Unter Vakuum soll im Sinne dieser Beschreibung ein gegenüber dem Atmosphärendruck bei Normalbedingungen, d. h. gegenüber dem Normaldruck P_{N}, deutlich geringerer Druck verstanden werden, der funktionsbedingt ausreichend ist. D. h. im Sinne dieser Beschreibung soll ein Unterdruck, der an diesem ersten Vakuumfeld anliegt, als Vakuum P₁ bezeichnet werden, wenn er so hoch ist, dass er die aufliegende Planplatte 1 während der Bearbeitung sicher hält.

Vorteilhaft ist die Vakuumkammer 8 mit einer porösen Einlage 14 z. B. aus einer Keramik verschlossen, die gegenüber der aufliegenden Planplatte 1 einen kleineren oder gleichen Umfang aufweist. Dadurch wird eine mögliche Beschädigung der porösen Einlage 14 durch die Laserstrahlung beim Überstreichen der Planplattenkante ausgeschlossen. Für eine kreisrunde Planplatte sollte demnach die poröse Einlage 14 ebenfalls eine kreisrunde Scheibe.
Zwischen der porösen Einlage 14 und der Nut 7 ist die Oberfläche des Spanntisches 5 vorteilhaft hochreflektierend für die Laserstrahlung ausgeführt, so dass die Laserstrahlung beim Überstreichen der Planplattenkante am Spanntisch 5 keine Schäden verursacht. Die gerahmte Stretchfolie 6 ist aus einem für die Laserstrahlung transparenten Material ausgeführt.
Anstelle einer einzelnen, die Vakuumkammer 8 zur Auflagefläche des Spanntisches 5 hin verschließenden porösen Einlage 14, kann die Vakuumkammer 8 grundsätzlich auch durch eine gasdichte Platte verschlossen sein, in welche mehrere poröse Einlagen 14 eingepasst sind. Die gerahmte Stretchfolie 6 wird dann nur punktuell flächig gehalten, was weniger vorteilhaft erscheint.

Dass im Unterschied zum Stand der Technik die Planplatte 1 nicht unmittelbar auf dem Spanntisch 5 aufliegt, sondern mittelbar über einer gerahmten Stretchfolie 6, macht für das Halten der vorerst unbearbeiteten Planplatte 1 kaum einen Unterschied.

Ebenfalls gleich dem Stand der Technik sind die als Werkzeug genannten Einrichtungen sowie Mittel zum relativen Bewegen 13 vorhanden und ausgeführt. Die Relativbewegung erlaubt das Einbringen von thermischen Spannungen und damit die Ausbildung von Trennrissen entlang vorgegebener gitterförmig angeordneter Trennlinien.

Nach dem Auftrennen der Planplatte 1 in einzelne Streifenplatten 4, durch das Erzeugen von Trennrissen in eine erste Bearbeitungsrichtung, werden diese Streifenplatten 4 in Einzelplatten 3 aufgeteilt, indem Trennrisse in eine zweite Bearbeitungsrichtung eingebracht werden, die mit der ersten Bearbeitungsrichtung einen Bearbeitungswinkel einschließt. Dieser Bearbeitungswinkel ist bevorzugt ein rechter Winkel, könnte jedoch auch hiervon abweichend sein, wodurch parallelogrammförmige Einzelplatten entstehen würden. Deren praktische Verwendbarkeit ist jedoch auf Einzelfälle reduziert, weshalb praxisnah in der weiteren Beschreibung von einem rechten Winkel als Bearbeitungswinkel und folglich rechteckförmigen Einzelplatten ausgegangen werden soll.

Bevor die Trennrisse in die zweite Bearbeitungsrichtung eingebracht werden, werden die Streifenplatten 4, die mit ihren Trennkanten noch aneinander liegen, voneinander separiert. An dieser Stelle unterscheiden sich die beschriebene Vorrichtung und auch das Verfahren grundlegend vom Stand der Technik.

Neben einem ersten Vakuumfeld, welches wie beschrieben gebildet ist und nur zum Halten der Planplatte 1 während des Einbringens der Trennrisse dient, umfasst die Vorrichtung ein zweites ansteuerbares Vakuumfeld, welches durch eine das erste Vakuumfeld umschließende Nut 7 gebildet wird. Im Falle eines kreisrunden ersten Vakuumfeldes bildet die Nut 7 entsprechend einen Kreisring.

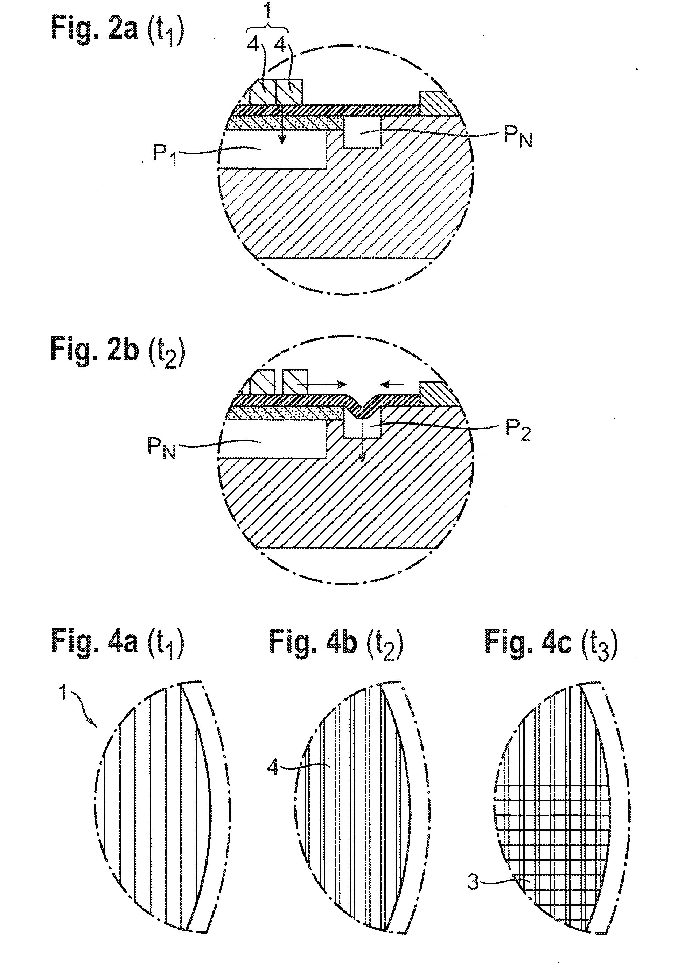

An Hand der Fig. 2a und 2b soll die Funktionsweise der beiden Vakuumfelder genauer erläutert werden.
Mit der Aufhebung des Vakuums P₁ am ersten Vakuumfeld und Anlegen eines Vakuums P₂ in der Nut 7 wird die darüber liegende gerahmte Stretchfolie 6 angesaugt und in die Nut 7 gezogen. Durch die Einspannung der Stretchfolie 61 in einen Rahmen 62, wodurch die gerahmte Stretchfolie 6 bestimmt ist, wird die Stretchfolie 61 über ihre gesamte Fläche innerhalb des Rahmens 62 gedehnt, wobei sie eine maximale Dehnung unmittelbar oberhalb der Nut 7 erfährt. Die auf der gerahmten Stretchfolie 6 haftenden Streifenplatten 4 werden auseinander auf einen Abstand gezogen. In dem gedehnten Zustand der Stretchfolie 61 wird wieder ein Vakuum P₁an das erste Vakuumfeld gelegt und anschließend das Vakuum P₂ in der Nut 7 aufgehoben. Die Streifenplatten 4 werden so mit dem zwischen ihnen geschaffenen Abstand zueinander wieder fixiert.

Auch unter dem Vakuum P₂ in der Nut 7 soll ein Unterdruck verstanden werden, der ausreichend ist, um die gerahmte Stretchfolie 6 in Abhängigkeit von ihren Materialeigenschaften hinreichend zu dehnen, um einen Abstand der Streifenplatten 4 zueinander zu bewirken, der eine Beeinflussung der Streifenplatten 4 beim Trennen in die zweite Bearbeitungsrichtung ausschließt.

Zum Anlegen eines Vakuums an die Nut 7 ist diese ebenfalls mit einer Vakuumpumpe 9 verbunden. Vorteilhaft ist diese Vakuumpumpe 9 die bereits vorhandene Vakuumpumpe 9 zum Erzeugen des ersten Vakuumfeldes, welche dann alternativ in der Vakuumkammer 8 bzw. der Nut 7 ein Vakuum erzeugt.
Ausgehend von einer üblicherweise kreisrunden Planplatte ist bei der Dimensionierung einer Vorrichtung darauf zu achten, dass der Rahmen 62 einen größeren Innendurchmesser aufweist als der Außendurchmesser der Nut 7 ist. Die gerahmte Stretchfolie 6 wird dann radial auf ihre Mitte hin gedehnt. Idealerweise ist die Planpatte 1 so aufgebracht, dass der Mittelpunkt mit dem der gerahmten Stretchfolie 6 zusammenfällt. Für eine reproduzierbare maximale Dehnung ist nicht nur die Höhe des Vakuums und damit die Zugkraft bestimmend, sondern auch ein reproduzierbares Flächenmaß, auf welches das Vakuum wirkt, weshalb der Rahmen außerhalb der Nut 7 auf dem Spanntisch 5 zur Auflage kommen sollte.
Die Nutform ist weniger von Bedeutung, jedoch deren Breite und Tiefe können die mögliche Dehnung beeinflussen. Je breiter die Nut ist, desto größer ist die Kraftangriffsfläche für das Vakuum. Eine zu flache Nut könnte die Materialmenge begrenzen, die in die Nut 7 gezogen werden kann. Vorteilhaft ist die Innenkante der Nut 7 abgerundet und die Oberfläche der porösen Einlage 14 möglichst gering haftend ausgebildet, damit die der Dehnung entgegenwirkende Haftreibung möglichst gering ist.

Zur Durchführung des Verfahrens wird die zu bearbeitende Planplatte 1, z. B. ein kreisrunder Silizium Wafer mit einem Durchmesser von 6" - 12", sofern sie nicht bereits auf einer gerahmten Stretchfolie 6 aufgebracht ist, auf eine solche aufgebracht. Wie bereits einleitend erläutert, werden Wafer üblicherweise bereits auf solchen Stretchfolien bearbeitet, gelagert und transportiert.

Die gerahmte Stretchfolie 6 mit dem Silizium Wafer wird auf den Spanntisch 5 so aufgelegt, dass der Wafer mittig der porösen Einlage 14 des ersten Vakuumfeldes zur Auflage kommt. An das erste Vakuumfeld wird ein Vakuum P₁ angelegt, d. h. ein Unterdruck in einer Höhe, um die gerahmte Stretchfolie 6 und damit den Wafer sicher während der nachfolgenden Bearbeitung zu halten. Es werden entsprechend der vorgegebenen Anzahl von Trennlinien z. B. in einem Abstand von 0,5 - 30 mm in einer ersten Bearbeitungsrichtung jeweils ein Initialdefekt erzeugt und anschließend von diesem ausgehend Trennrisse erzeugt.

Das Setzen der Initialdefekte z. B. mit einem Diamanträdchen oder einem Laser und das Erzeugen der Trennrisse entlang der Trennlinien mittel Laserstrahlung und nacheilender Kühlmittelstrahlung sind dem Fachmann aus dem Stand der Technik bekannt und müssen daher nicht näher erläutert werden.

Erfindungswesentlich ist das Auf - Abstand - Bringen der geschnittenen Streifenplatten 4 um einen Abstand, um beim Trennen der Streifenplatten 4 in Einzelplatten 3 eine gegenseitige Beeinflussung zu verhindern. Ein Abstand von 3 - 10 µm ist ausreichend.

Das Setzen der Initialdefekte, was in der zweiten Bearbeitungsrichtung nicht nur an einer Planplattenkante erfolgt, sondern jeweils an einer Streifenplattenkante, kann vor oder nach dem Schritt des Auf - Abstand - Bringens erfolgen. Für Wafer in einem Dickenbereich von 100 - 300 µm ist es von Vorteil, den Initialdefekt vor diesem Schritt zu erzeugen. D. h. es werden erst alle Initialdefekte gesetzt für die Trennrisse in die zweite Bearbeitungsrichtung, bevor die Streifenplatten 4 auf Abstand gebracht werden.
Nach dem Auf - Abstand - Bringen werden die Trennrisse in die zweite Bearbeitungsrichtung jeweils ausgehend von einem Initialdefekt in einem Abstand von 0,5 - 30 mm erzeugt. Bevorzugt werden die Einzelplatten 3 quadratisch, also unter einem Bearbeitungswinkel von 90° hergestellt.
In den Fig. 4a - 4b ist der Ausschnitt eines Wafers in verschiedenen Bearbeitungsstufen der Trennung dargestellt.
Zum Zeitpunkt t₁ (Fig. 4a) ist der Wafer in der ersten Bearbeitungsrichtung aufgetrennt, wobei die entstandenen Streifenplatten 4 noch aneinander liegen.
Zum Zeitpunkt t₂ (Fig. 4b) sind die Streifenplatten 4 bereits auf Abstand gebracht und zum Zeitpunkt t₃ (Fig. 4c) sind die Streifenplatten 4 bereits über einen Teil ihrer Länge in Einzelplatten 3 aufgeteilt.

## Patentansprüche

1. Verfahren zum Trennen einer Planplatte aus sprödbrüchigem Material, bei dem mit einem Einbringen von gitterförmig angeordneten Trennlinien mittels thermisch induzierter Spannungen mit Laser die Planplatte in eine Vielzahl von Einzelplatten vorgegebener Kantenlänge aufgetrennt wird,
indem jeweils ausgehend von einem zu setzenden Initialdefekt zuerst Trennlinien in eine erste Bearbeitungsrichtung eingebracht werden, womit die Planplatte (1) in eine Vielzahl von Streifenplatten (4) aufgeteilt wird und
anschließend, nachdem die Streifenplatten (4) um einen Abstand zueinander auseinander bewegt wurden, Trennlinien in eine zweite Bearbeitungsrichtung, die mit der ersten Bearbeitungsrichtung einen Bearbeitungswinkel, vornehmlich einen rechten Winkel, einschließt, erzeugt werden, womit die einzelnen Streifenplatten (4) in Einzelplatten (3) aufgeteilt werden und
bei dem die Planplatte (1) bzw. die Streifenplatten (4) und Einzelplatten (3) durch ein Vakuum (P₁) auf einem Spanntisch (5) gehalten werden, indem die Planplatte (1) auf eine gerahmte Stretchfolie (6) aufgeklebt wird und die gerahmte Stretchfolie (6) wenigstens in senkrechter Richtung zur ersten Bearbeitungsrichtung gedehnt wird, **dadurch gekennzeichnet,**
**dass** während des Dehnens das die Planplatte (1) haltende Vakuum (P₁) aufgehoben wird und die gerahmte Stretchfolie (6) radial ausgehend vom Mittelpunkt der aufgeklebten Planplatte (1) gedehnt wird, indem ein Vakuum (P₂) entlang einer die Planplatte (1) umschließenden Nut (7) angelegt wird.

2. Verfahren nach Anspruch 1, **dadurch gekennzeichnet,**
**dass** die Initialdefekte für die Trennlinien in die zweite Bearbeitungsrichtung vor dem Dehnen der gerahmten Stretchfolie (6) gesetzt werden.

3. Vorrichtung zum Trennen einer Planplatte (1) aus sprödbrüchigem Material, die auf eine gerahmte Stretchfolie (6) aufgeklebt ist, mit
einer Einrichtung zum Beaufschlagen einer Laserstrahlung (10) entlang vorgegebener Trennlinien auf der Planplatte (1),
einer Einrichtung zum Beaufschlagen einer Kühlmittelstrahlung (11) entlang der Trennlinien auf der Planplatte (1),
einer Einrichtung zum Erzeugen von Initialdefekten (12) an jeweils einem Ausgangspunkt für eine Trennlinie,
einem Spanntisch (5) mit einem ersten ansteuerbaren Vakuumfeld, vorgesehen zur Auflage und zum Halten der Planplatte (7),
sowie Mittel zum relativen Bewegen (13) der genannten Einrichtungen zur Spanneinrichtung entlang gitterförmig angeordneter Trennlinien **dadurch gekennzeichnet,**
**dass** in der Spanneinrichtung ein zweites, getrennt ansteuerbares Vakuumfeld vorgesehen ist, welches durch eine Nut (7) gebildet wird, die so ausgebildet ist, dass sie die aufliegende Planplatte (1) umschließt und in welche die gerahmte Stretchfolie (6) gezogen wird, um sie zu dehnen.

4. Vorrichtung nach Anspruch 3, **dadurch gekennzeichnet,**
**dass** die innere Nutkante abgerundet ist.

5. Vorrichtung nach Anspruch 3 oder 4, **dadurch gekennzeichnet,**
**dass** die Auflagefläche des ersten vakuumfeldes eine poröse Einlage (14) ist.

6. Vorrichtung nach einem der Ansprüche 3 - 5, **dadurch gekennzeichnet,**
**dass** die Auflagefläche eine möglichst geringe Haftreibung aufweist.

## Claims

1. A method for separating a planar plate made of a brittle material, wherein said planar plate is divided into a plurality of individual plates having a specified edge length by introducing thermally induced stresses by means of a laser beam in said planar plate thereby producing separation lines in a lattice-like pattern in said planar plate,
said lattice-like pattern being formed by first producing separation lines along a first working direction starting from an initial defect to be created thereby dividing said planar plate (1) into a plurality of plate strips (4), and
by subsequently producing separation lines along a second working direction which forms a working angle, especially a right angle, with said first working direction after said plate strips (4) have been moved a certain distance apart from one another, thereby allowing division of said individual plate strips (4) into individual plates (3),
wherein said planar plate (1) or said plate strips (4) and individual plates (3) are held on a clamping table (5) by means of a vacuum (P₁), by bonding said planar plate (1) to a framed stretch film (6), said framed stretch film (6) being stretched at least in a direction perpendicular to the first working direction, **characterized in that**
said vacuum (P₁) holding said planar plate (1) is removed during stretching and said framed stretch film (6) is stretched radially, starting from the center of the bonded planar plate (1), by applying a vacuum (P₂) along a groove (7) that encloses the planar plate (1).

2. The method according to claim 1, **characterized in that** said initial defects for the separation lines along said second working direction are created prior to stretching the framed stretch film (6).

3. A device for separating a planar plate (1) made of a brittle material and bonded to a framed stretch film (6), said device comprising:
a unit for applying a laser beam (10) along specified separation lines on said planar plate (1),
a unit for applying a coolant jet (11) along said separation lines on said planar plate (1),
a unit for creating initial defects (12) on each starting point for a separation line,
a clamping table (5) with a first controllable vacuum field for mounting and holding said planar plate (1), and
means for moving (13) said units relative to said clamping unit along separation lines that form a lattice-like pattern, **characterized in that**
said clamping unit includes a separately controllable second vacuum field that is formed by a groove (7) designed to enclose said mounted planar plate (1) and into which said framed stretch film (6) is pulled in order to stretch it.

4. The device according to claim 3, **characterized in that** an inside edge of said groove is rounded off.

5. The device according to claim 3 or 4, **characterized in that** the mounting surface of said first vacuum field is a porous liner (14).

6. The device according to any one of claims 3 to 5, **characterized in that** said mounting surface has a static friction that is as low as possible.

## Revendications

1. Procédé de séparation d'une plaque plane constituée d'un matériau fragile, dans lequel procédé ladite plaque plane est séparée en une pluralité de plaques individuelles, dont chacune présente une longueur d'arête prédéfinie, par introduction de tensions induites thermiquement au moyen d'un rayonnement laser dans ladite plaque plane de manière à produire dans ladite plaque plane des lignes de séparation disposées en treillis,
la réalisation dudit treillis comprenant d'abord l'étape de réalisation de lignes de séparation selon une première direction d'usinage, commençant chaque ligne de séparation par réalisation d'un défaut initial, pour ainsi séparer ladite plaque plane (1) en une pluralité de bandes (4), et puis,
ayant écarté lesdites bandes (4) d'une certaine distance, l'étape successive de réalisation de lignes de séparation selon une deuxième direction d'usinage qui fait un angle d'usinage, notamment un angle droit, avec ladite première direction d'usinage pour ainsi permettre la division desdites bandes individuelles (4) en plaques individuelles (3),
ladite plaque plane (1) ou lesdites bandes (4) et lesdites plaques individuelles (3) étant tenues sur une table de serrage (5) au moyen d'un vide (P₁), ladite plaque plane (1) ayant été collée sur un film extensible encadré (6) qui est étendu au moins dans une direction perpendiculaire à ladite première direction d'usinage, ledit procédé étant **caractérisé en ce que**
ledit vide (P₁) tenant ladite plaque plane (1) est neutralisé pendant ladite extension et ledit film extensible encadré (6) est étendu radialement, à partir du centre de ladite plaque plane (1) collée, par application d'un vide (P₂) selon une rainure (7) entourant ladite plaque plane (1).

2. Procédé selon la revendication 1, **caractérisé en ce que** lesdits défauts initiaux destinés à réaliser lesdites lignes de séparation selon ladite deuxième direction d'usinage sont produits avant l'extension dudit film extensible encadré (6).

3. Dispositif de séparation d'une plaque plane (1) constituée d'un matériau fragile et collée sur un film extensible encadré (6), ledit dispositif comprenant:
un ensemble appliquant un rayonnement laser (10) selon des lignes de séparation prédéfinies sur ladite plaque plane (1),
un ensemble appliquant un jet de réfrigérant (11) selon lesdites lignes de séparation sur ladite plaque plane (1),
un ensemble produisant lesdits défauts initiaux (12) au point de départ respectif de chaque ligne de séparation,
une table de serrage (5) avec un premier champ à vide réglable pour supporter et tenir ladite plaque plane (1), et
des moyens de déplacement relatif (13) desdits ensembles par rapport audit ensemble de serrage selon des lignes de séparation disposées en treillis, **caractérisé en ce que**
ledit ensemble de serrage présente un deuxième champ à vide qui est réglable de manière indépendante et qui est réalisé au moyen d'une rainure (7) destinée à entourer ladite plaque plane (1) supportée et dans laquelle rainure ledit film extensible encadré (6) est tiré pour son extension.

4. Dispositif selon la revendication 3, **caractérisé en ce que** ladite rainure présente une surface intérieure arrondie.

5. Dispositif selon la revendication 3 ou 4, **caractérisé en ce que** la surface de support dudit premier champ à vide est une fiche intercalaire poreuse (14).

6. Dispositif selon l'une quelconque des revendications 3 à 5, **caractérisé en ce que** ladite surface de support présente un frottement statique minimal.
